# EUROPEAN PATENT APPLICATION

(11) **EP 4 745 915 A1**
(43) Date of publication of application: **20.05.2026**
(21) Application number: 25208729.1
(22) Date of filing: 15.10.2025
(51) Int. Cl.: G06V 10/82, G06V 20/70, G06V 30/10

(54) **INFORMATION PROCESSING APPARATUS, PROMPT GENERATION METHOD, AND IMAGE GENERATION METHOD**

(30) Priority: 14.11.2024 JP 2024199115
(71) Applicant: Lenovo (Singapore) Pte. Ltd., Singapore 556741 (SG)
(72) Inventor: NOMURA, Ryohta, Yokohama-shi, 220-0012 (JP); ABE, Kyosuke, Yokohama-shi, 220-0012 (JP)
(74) Representative: Openshaw & Co.

(57) **Abstract**

An object of the present invention is to improve convenience in a case of using image generation AI.

An information processing apparatus includes a letter detection unit configured to detect letters in an image, a word cluster determination unit configured to determine, as a word cluster, a letter group including one or a plurality of words among the letters detected by the letter detection unit, a position information acquisition unit configured to acquire position information indicating a position of the word cluster in the image, the word cluster being determined by the word cluster determination unit, and a prompt generation unit configured to generate a prompt as an input sentence for an image generation model based on the word cluster and the position information.

## Description

### BACKGROUND OF THE INVENTION

### Field of the Invention

The present invention relates to an information processing apparatus, a prompt generation method, and an image generation method.

### Description of the Related Art

In recent years, an image generation artificial intelligence (AI) that generates an image from an image such as a hand-drawn sketch (image to image) has been known. In addition, there is also an image generation AI that generates an image by inputting a prompt created using text (text to image) (for example, see Japanese Unexamined Patent Application Publication No. 2024-120131).

### SUMMARY OF THE INVENTION

However, a person who is not good at drawing feels anxious about drawing an image that the person imagines, and there is a concern that an image as desired is not generated. In addition, some of the image generation AIs as described above generate an image by inputting a prompt in which the objects the user wants to include in the image to be generated are described in text, but it is not easy and troublesome for the user to express the objects accurately (and in a way the image generation AI can understand), since the user has to describe the position in the image where the objects are to be positioned in a sentence.

The present invention has been made in view of the above circumstances, and an object of the present invention is to provide an information processing apparatus, a prompt generation method, and an image generation method that improve convenience in a case of using image generation AI.

The present invention has been made in order to solve the above-described problems, and an information processing apparatus according to the first aspect of the present invention includes a letter detection unit configured to detect letters in an image, a word cluster determination unit configured to determine, as a word cluster, a letter group including one or a plurality of words among the letters detected by the letter detection unit, a position information acquisition unit configured to acquire position information indicating a position of the word cluster in the image, the word cluster being determined by the word cluster determination unit, and a prompt generation unit configured to generate a prompt as an input sentence for an image generation model based on the word cluster and the position information.

In the information processing apparatus according to the first aspect of the present invention, the prompt generation unit may generate a prompt including the word cluster and the position information in a sentence.

In the information processing apparatus according to the first aspect of the present invention, the prompt generation unit may generate the prompt indicating an instruction to generate an image so that an image corresponding to the word cluster is positioned at a position corresponding to the position information.

In the information processing apparatus according to the first aspect of the present invention, the prompt generation unit may generate the prompt indicating an instruction to position the word cluster as letters at a position corresponding to the position information in a case where a specific symbol is included in the word cluster.

In the information processing apparatus according to the first aspect of the present invention, the letter detection unit may detect letters by analyzing handwritten strokes included in the image.

The information processing apparatus according to the first aspect of the present invention may further include a letter removal unit configured to generate an image in which the letters detected by the letter detection unit are removed from the image as an input image for the image generation model.

The information processing apparatus according to the first aspect of the present invention may further include a generated image acquisition unit configured to acquire a generated image output from the image generation model by inputting the input image generated by the letter removal unit and the prompt generated by the prompt generation unit to the image generation model.

In addition, a prompt generation method in an information processing apparatus according to the second aspect of the present invention, the method includes a step of detecting letters in an image via a letter detection unit, a step of determining, as a word cluster, a letter group including one or a plurality of words among the letters detected by the letter detection unit, via a word cluster determination unit, a step of acquiring position information indicating a position of the word cluster in the image via a position information acquisition unit, the word cluster being determined by the word cluster determination unit, and a step of generating a prompt as an input sentence for an image generation model based on the word cluster and the position information via a prompt generation unit.

In addition, an image generation method in an information processing apparatus according to the third aspect of the present invention, the method includes a step of detecting letters in an image via a letter detection unit, a step of determining, as a word cluster, a letter group including one or a plurality of words among the letters detected by the letter detection unit, via a word cluster determination unit, a step of acquiring position information indicating a position of the word cluster in the image via a position information acquisition unit, the word cluster being determined by the word cluster determination unit, a step of generating a prompt as an input sentence for an image generation model based on the word cluster and the position information via a prompt generation unit, a step of generating an image in which the letters detected by the letter detection unit are removed from the image via a letter removal unit as an input image for the image generation model, and a step of acquiring a generated image output from the image generation model by inputting the input image generated by the letter removal unit and the prompt generated by the prompt generation unit to the image generation model, via a generated image acquisition unit.

According to the above-described aspects of the present invention, it is possible to improve convenience in a case of using image generation AI.

### BRIEF DESCRIPTION OF THE DRAWINGS

FIG. 1 is a diagram illustrating an example of a configuration of an information processing system according to an embodiment.
FIG. 2 is a block diagram illustrating an example of a hardware configuration of an information processing apparatus according to the embodiment.
FIG. 3 is a diagram illustrating an example of an image generation UI according to the embodiment.
FIG. 4 is a diagram illustrating an input example of an input area and an output example of an output area according to the embodiment.
FIG. 5 is a block diagram illustrating an example of a functional configuration related to image generation processing according to the embodiment.
FIG. 6 is a flowchart illustrating an example of prompt generation processing according to the embodiment.
FIG. 7 is a flowchart illustrating an example of the image generation processing according to the embodiment.
FIG. 8 is a diagram illustrating another example of an input of the input area and an output of the output area according to the embodiment.
FIG. 9 is a diagram illustrating examples of a prompt in a case where a specific symbol is present and a case where the specific symbol is not present according to the embodiment.
FIG. 10 is a diagram illustrating an example of an image generated by handwritten input of the letters illustrated in FIG. 9 according to the embodiment.

### DETAILED DESCRIPTION OF THE INVENTION

Hereinafter, an embodiment of the present invention will be described with reference to the drawings.

### [System Configuration]

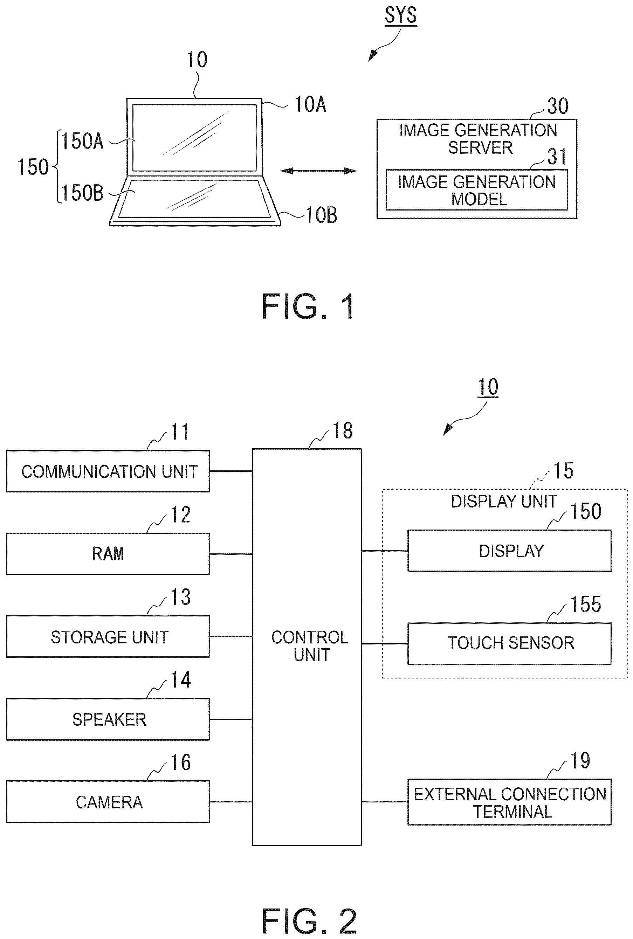

FIG. 1 is a diagram illustrating an example of a configuration of an information processing system according to the present embodiment. The information processing system SYS includes the information processing apparatus 10 and an image generation server 30.

The information processing apparatus 10 is, for example, a clamshell type (laptop) personal computer (PC). In the information processing apparatus 10, a first chassis 10A and a second chassis 10B having a substantially quadrangular plate shape (for example, a flat plate shape) are coupled (connected) to each other via a hinge mechanism to be openable and closable. In addition, the information processing apparatus 10 is provided with a display 150 over the first chassis 10A to the second chassis 10B.

The display 150 is a flexible display that can be bent when the first chassis 10A and the second chassis 10B are opened and closed. As the flexible display, for example, an organic EL display or the like is used. For example, the display 150 can be used not only in a single screen mode in which the entire screen region is used as one screen but also in a two-screen mode in which the entire screen region is divided into two screens of a first screen region 150A on the first chassis 10A side and a second screen region 150B on the second chassis 10B side. For example, when the information processing apparatus 10 is used by being placed on a desk, the second screen region 150B on the second chassis 10B side is a substantially horizontal screen parallel to the surface of the desk.

In addition, a touch sensor is provided on (the surface of) the screen of the display 150. The information processing apparatus 10 can detect a touch operation on a screen region of the display 150. By bringing the information processing apparatus 10 into an open state, the user can visually recognize the display of the display 150 provided on the inner surfaces of each of the first chassis 10A and the second chassis 10B, and can perform a touch operation on the display 150, and thus the information processing apparatus 10 can be used.

The image generation server 30 includes an image generation model 31. The image generation model 31 is, for example, an image generation model trained using a diffusion model, and generates an image from an input image or a prompt (text). That is, the image generation server 30 functions as an image generation artificial intelligence (AI) that generates and outputs an image from an image or a prompt (text) using the image generation model 31. The image generation server 30 may be configured as one server or may be configured by being distributed to a plurality of servers.

In the present embodiment, a configuration will be described as an example in which an image generation AI that generates an image using the image generation model 31 is provided in the server, and the information processing apparatus 10 communicates with the server to use the function of the image generation AI. However, a configuration may be adopted in which the function of the image generation AI is downloaded to the information processing apparatus 10 for local use.

### [Hardware Configuration of Information Processing Apparatus 10]

Hereinafter, a specific configuration of the information processing apparatus 10 will be described.

FIG. 2 is a block diagram illustrating an example of a hardware configuration of an information processing apparatus 10 according to the present embodiment. The information processing apparatus 10 includes a communication unit 11, a random access memory (RAM) 12, a storage unit 13, a speaker 14, a display unit 15, a camera 16, and a control unit 18. Each of these units is connected via a bus or the like in a communicable manner.

The communication unit 11 is configured to include, for example, a plurality of Ethernet (registered trademark) ports, a plurality of digital input and output ports such as universal serial bus (USB), a communication device that performs wireless communication such as Bluetooth (registered trademark) or Wi-Fi (registered trademark), and the like.

For example, the communication unit 11 can communicate with a touch pen, a mouse, a touch pad, or the like using Bluetooth (registered trademark). In addition, the communication unit 11 can communicate with the image generation server 30 illustrated in FIG. 1 by connecting to the Internet via wireless communication such as Wi-Fi (registered trademark) or wired communication such as Ethernet (registered trademark).

The RAM 12 is a volatile memory in which a program or data of processing executed by the control unit 18 is developed, and various types of data are appropriately stored or deleted. Since the RAM 12 is a volatile memory, the RAM 12 does not hold data when power supply to the RAM 12 is stopped. Data that needs to be held when the power supply to the RAM 12 is stopped is moved to the storage unit 13.

The storage unit 13 is a storage device configured to include any one or a plurality of a solid state drive (SSD), a hard disk drive (HDD), a read only memory (ROM), a flash ROM, or the like. For example, the storage unit 13 stores a program or setting data of a basic input output system (BIOS), a program of an operating system (OS) or an application that operates on the OS, various types of data used in the application, and the like.

The speaker 14 outputs an electronic sound, a voice, or the like.

The display unit 15 includes a display 150 and a touch sensor 155. As described above, the display 150 is a flexible display that can be bent in accordance with the opening and closing of the first chassis 10A and the second chassis 10B. The display 150 displays a desktop screen of an OS, a window of an application that is being executed, and the like according to the control of the control unit 18.

The touch sensor 155 is provided on a screen of the display 150 and detects a touch operation on the screen. The touch operation includes, for example, a tap operation, a slide operation, a flick operation, a swipe operation, and a pinch operation. In addition, a finger, a touch pen, or the like can be used as an operation means for performing the touch operation.

The camera 16 is configured to include a lens, an imaging element, and the like. The camera 16 captures an image (a still image or a video) and outputs data of the captured image according to the control of the control unit 18.

The control unit 18 is configured to include a processor such as a central processing unit (CPU), a graphic processing unit (GPU), or a microcomputer, and various functions are realized by executing programs (various programs such as a BIOS, an OS, and applications that operate on the OS) stored in the storage unit 13 and the like. For example, the control unit 18 controls a screen mode of the display 150, controls display in a screen region, and detects a touch operation on the touch sensor 155.

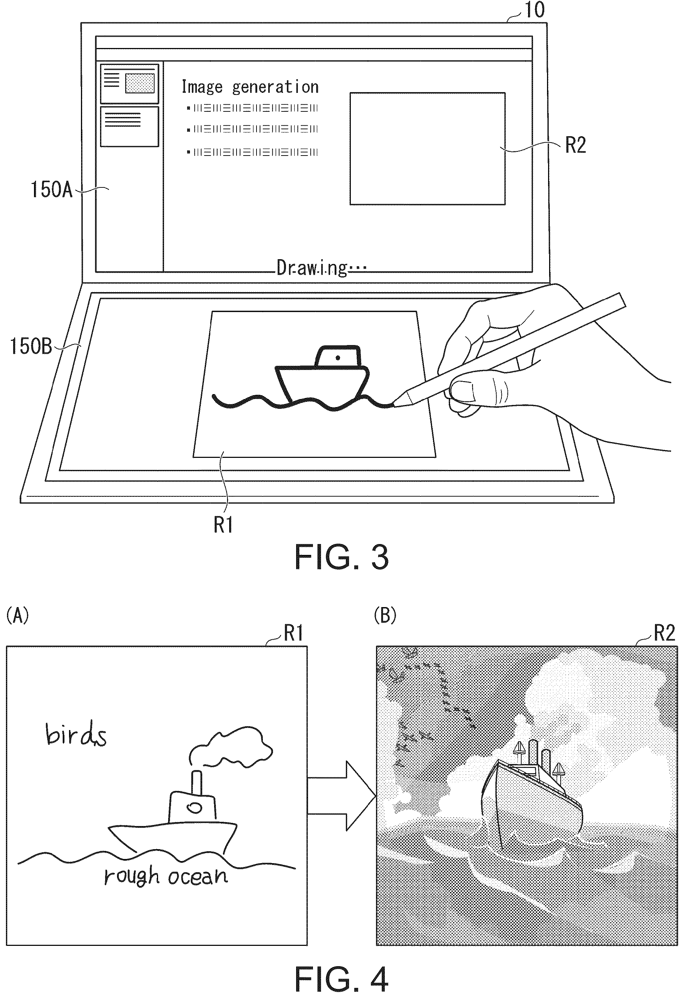

Next, the image generation processing using the image generation model (image generation AI) in the information processing apparatus 10 will be described. First, a user interface (UI) will be described with reference to FIG. 3.

### [Image Generation UI]

FIG. 3 is a diagram illustrating an example of an image generation UI according to the present embodiment. In the example illustrated in the drawing, the information processing apparatus 10 controls the display 150 in a two-screen mode of the first screen region 150A and the second screen region 150B. A window of an application (hereinafter, referred to as an "image generation application") having an image generation function of generating an image using an image generation model (image generation AI) is displayed in the first screen region 150A and the second screen region 150B.

In the second screen region 150B, a window including an input area R1 for inputting information on the image to be generated among the windows of the image generation application is displayed as the UI. In addition, in the first screen region 150A, a window including an output area R2 for displaying the generated generated image among the windows of the image generation application is displayed as the UI.

The user can input a sketch in the input area R1 by hand and can also input letters on the sketch by hand. Since the second screen region 150B is a substantially horizontal screen when the information processing apparatus 10 is used by being placed on a desk, the user can easily perform input because the input area R1 is present on the second screen region 150B side.

The user can mainly use a touch pen in a case of inputting a sketch and letters by hand, but may use a finger without using the touch pen, may use an external mouse (not illustrated), or may use an external touch pad (not illustrated).

It should be noted that the UI for image generation illustrated in FIG. 3 is an example, and the positioning and size of the input area R1 and the output area R2, the screen regions where the input area R1 and the output area R2 are displayed, and the like are not limited to this example.

FIG. 4 is a diagram illustrating an input example of an input area R1 and an output example of an output area R2 according to the present embodiment. (A) of FIG. 4 illustrates an input example of the input area R1. As described above, an input of a sketch and letters is possible in the input area R1.

In the input example illustrated in (A) of FIG. 4, "ship" and "water surface" are input by hand as a sketch by the user. Here, the user wants to generate an image in which a lower part below the water surface is a rough sea and a plurality of birds is flying in the sky, but it is difficult to express the rough sea with a drawing, and it takes time and effort to draw a plurality of birds. In a case where it is difficult or it takes time and effort to express the objects with a drawing as described above, the user can input the letters. In the example illustrated in the drawing, the letters "rough ocean" are input to the lower part below the water surface by hand, and the letters "birds" are input to a part of the sky above the water surface by hand.

The image generation application detects letters from the input image of the sketch and the letters, and generates a prompt based on the letters. Then, the image generation application acquires the generated image generated by the image generation model 31 by inputting the input data based on the generated prompt and the sketch image to the image generation model 31. Then, the image generation application displays the acquired generated image in the output area R2.

(B) of FIG. 4 illustrates an example of the generated image displayed in the output area R2 as an output example of the output area R2. The generated image illustrated in this drawing is an image diagram drawn by imitating the generated image generated by the image generation model 31. In the example of the generated image illustrated in (B) of FIG. 4, an image in which a ship navigates on a rough sea and a plurality of birds is flying in the sky is generated according to the input example of the sketch and the letters illustrated in (A) of FIG. 4.

The generated image (generated image displayed in the output area R2) generated by the image generation application can also be used in other applications, and for example, the generated image can be copied and pasted and displayed in a window of other applications. The other applications are, for example, applications capable of inserting or pasting images, such as an application having a presentation creation function, an application having a document creation function, or an application having an image editing function.

### [Functional Configuration of Image Generation Processing]

Next, image generation processing of detecting letters, generating a prompt, and generating an image based on the generated prompt and the sketch image will be described in detail.

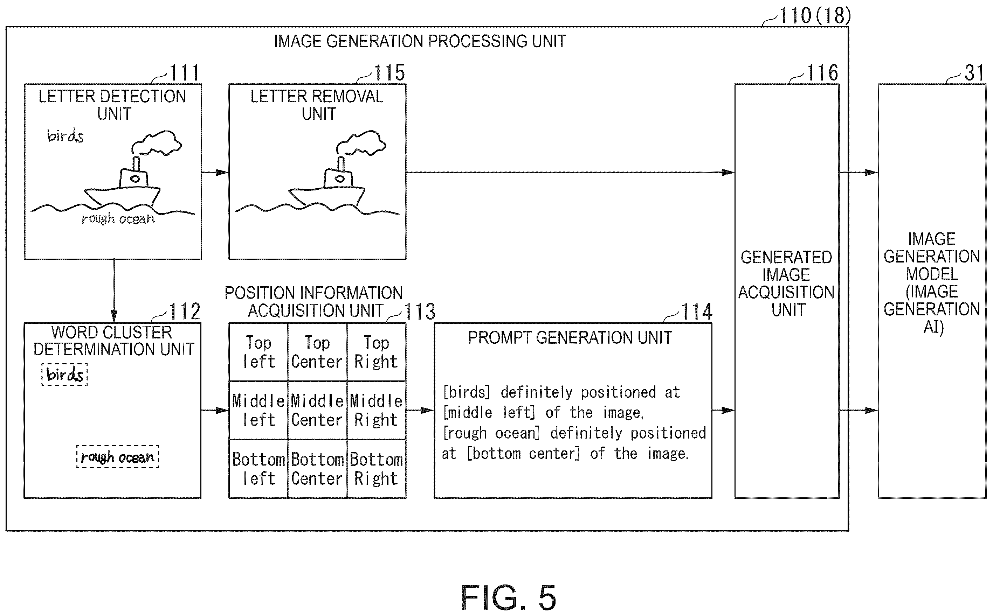

FIG. 5 is a block diagram illustrating an example of a functional configuration related to image generation processing according to the present embodiment. The image generation processing unit 110 illustrated in the drawing has a functional configuration in which the control unit 18 executes the image generation application to perform the image generation processing. The image generation processing unit 110 includes a letter detection unit 111, a word cluster determination unit 112, a position information acquisition unit 113, a prompt generation unit 114, a letter removal unit 115, and a generated image acquisition unit 116.

The letter detection unit 111 detects letters in an image including a sketch and letters input to the input area R1 (see FIG. 3). For example, the letter detection unit 111 detects letters by analyzing strokes of handwritten letters included in the image.

The word cluster determination unit 112 determines a letter group including one or a plurality of words among the letters detected by the letter detection unit 111 as a word cluster. For example, the word cluster determination unit 112 determines the word cluster based on the distance between the letters detected by the letter detection unit 111. In addition, the word cluster determination unit 112 sets a bounding box in a range (partial region) around a letter group for each word cluster.

In the example illustrated in the drawing, "birds" and "rough ocean" are determined as the word clusters, and the bounding boxes of each of the word clusters are indicated by squares. The word cluster determination unit 112 outputs information on the bounding box for each word cluster to the position information acquisition unit 113.

The position information acquisition unit 113 acquires position information indicating a position of the word cluster determined by the word cluster determination unit 112 in the image. For example, the position information acquisition unit 113 divides the range of the image into 9 ranges of 3 × 3, and determines the position of the bounding box of the word cluster from the divided ranges to acquire the position information. The determination of the position of the bounding box may be, for example, a determination based on a position of an upper left corner of the bounding box or a determination based on a center position of the bounding box.

In the example illustrated in the drawing, the position information acquisition unit 113 acquires "Middle Left" as the position information of "birds" and acquires "Bottom Center" as the position information of "rough ocean". The position information acquisition unit 113 outputs the acquired position information of the word cluster to the prompt generation unit 114.

The prompt generation unit 114 generates a prompt as an input sentence for the image generation model 31 based on the word cluster and the position information. For example, the prompt generation unit 114 generates a prompt including a word cluster and position information in a sentence. That is, the prompt generation unit 114 generates a prompt indicating an instruction to generate an image so that an image corresponding to the word cluster is positioned at the position corresponding to the position information acquired by the position information acquisition unit 113.

For example, the prompt generation unit 114 generates a prompt using a predetermined format. As the predetermined format, for example, a sentence such as "[word cluster] positioned at [position information]" is set in advance. The prompt generation unit 114 generates a prompt by applying the letters (word cluster) detected from the image and the position information thereof to the parts of [word cluster] and [position information] in the sentence.

In the example illustrated in the drawing, a sentence of "[word cluster] definitely positioned at [position] of the image" is set as the format for the prompt. The prompt generation unit 114 generates a prompt of "[birds] definitely positioned at [middle left] of the image, [rough ocean] definitely positioned at [bottom center] of the image."

Examples of these prompts are merely examples, and any format can be used for setting.

In the present embodiment, the position of the word cluster is determined by dividing the range of the image into 9 ranges of 3 × 3, but the present invention is not limited thereto, and the number of divisions of the range of the image can be freely set. In addition, the position of the word cluster may be defined by coordinates in the image.

The letter removal unit 115 generates an image in which the letters detected by the letter detection unit 111 are removed from the image, as an input image for the image generation model 31.

The generated image acquisition unit 116 inputs the input image (image of the sketch without letters) generated by the letter removal unit 115 and the prompt generated by the prompt generation unit 114 to the image generation model 31. The image generation model 31 generates and outputs an image based on the input input image (image of the sketch without letters) and prompt. As a result, the generated image acquisition unit 116 acquires the generated image output from the image generation model 31. In addition, the generated image acquisition unit 116 displays the acquired generated image in the output area R2 (see FIG. 3).

### [Operation of Prompt Generation Processing]

Next, an operation of the prompt generation processing executed by the image generation processing unit 110 will be described.

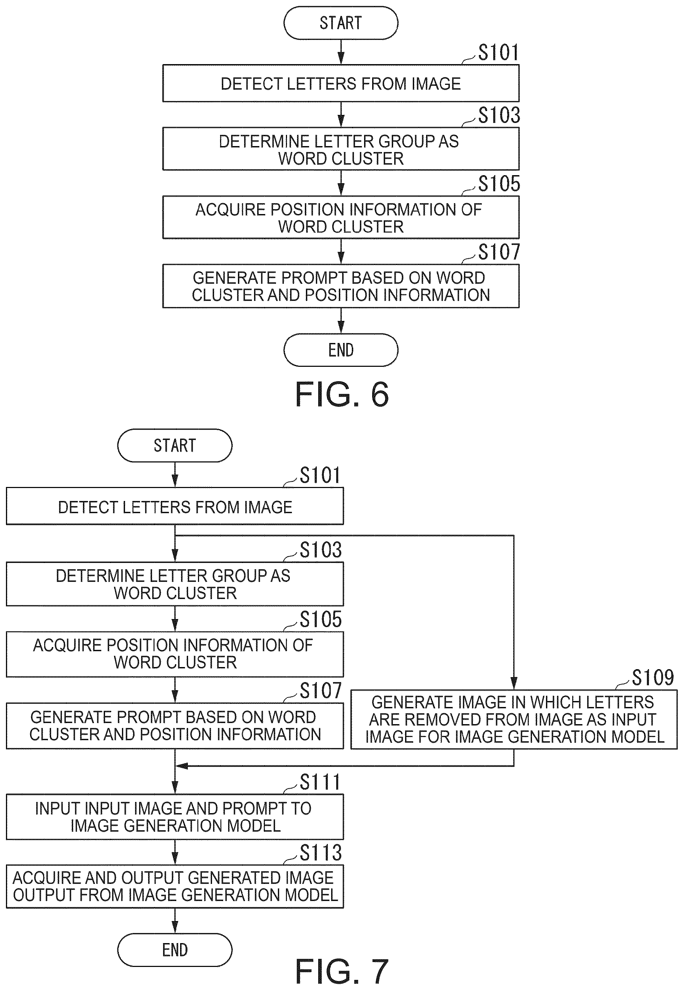

FIG. 6 is a flowchart illustrating an example of prompt generation processing according to the present embodiment.

(Step S101) The image generation processing unit 110 detects the letters in the image from the image including the sketch and the letters input to the input area R1 (see FIG. 3). Then, the process proceeds to the processing of step S103.

(Step S103) The image generation processing unit 110 determines a letter group including one or a plurality of words among the letters detected in step S101 as a word cluster. For example, the word cluster determination unit 112 sets a bounding box (partial region around a letter group) in a range of the letter group for each word cluster. Then, the process proceeds to the processing of step S105.

(Step S105) The image generation processing unit 110 acquires the position information indicating the position of the word cluster in the image determined in step S103. For example, the position information acquisition unit 113 divides the range of the image into 9 ranges of 3 × 3 (see FIG. 5), and determines the position of the bounding box of the word cluster from the divided ranges to acquire the position information. Then, the process proceeds to the processing of step S107.

(Step S107) The image generation processing unit 110 generates a prompt as an input sentence for the image generation model 31 based on the word cluster and the position information. For example, the image generation processing unit 110 generates a prompt including a word cluster and position information in the sentence (see FIG. 5).

### [Operation of Image Generation Processing]

Next, an operation of the image generation processing executed by the image generation processing unit 110 will be described.

FIG. 7 is a flowchart illustrating an example of the image generation processing according to the present embodiment. In this drawing, the same reference numerals are assigned to the processing corresponding to each processing of FIG. 6, and the description thereof will be omitted. The processing of steps S101 to S107 is prompt generation processing illustrated in FIG. 6.

(Step S109) When the image generation processing unit 110 detects the letters in the image from the image including the sketch and the letters input to the input area R1 (see FIG. 3) in step S101, the image generation processing unit 110 generates an image in which the detected letters are removed from the image as the input image for the image generation model 31. Then, the process proceeds to the processing of step S111.

(Step S111) The image generation processing unit 110 inputs the input image (image of the sketch without the letters) generated in step S109 and the prompt generated in step S107 to the image generation model 31. Then, the process proceeds to the processing of step S113.

Here, the image generation model 31 generates and outputs an image based on the input input image (image of the sketch without the letters) and prompt.

(Step S113) The image generation processing unit 110 acquires the generated image output from the image generation model 31. In addition, the image generation processing unit 110 displays the acquired generated image in the output area R2 (see FIG. 3).

### [Another Input Example of Image Generation Processing]

Next, another input example of the image generation processing in the present embodiment will be described. In the present embodiment, as in the example illustrated in FIG. 4, the image can be generated from the input of the sketch and the letters, but the image can also be generated from the input of only the sketch or only the letters. In a case of only the sketch, the prompt is not generated because letters are not detected from the image, and only the sketch image is input to the image generation model 31. In a case of only the letters, the prompt is generated, and an image without a sketch and the generated prompt are input to the image generation model 31.

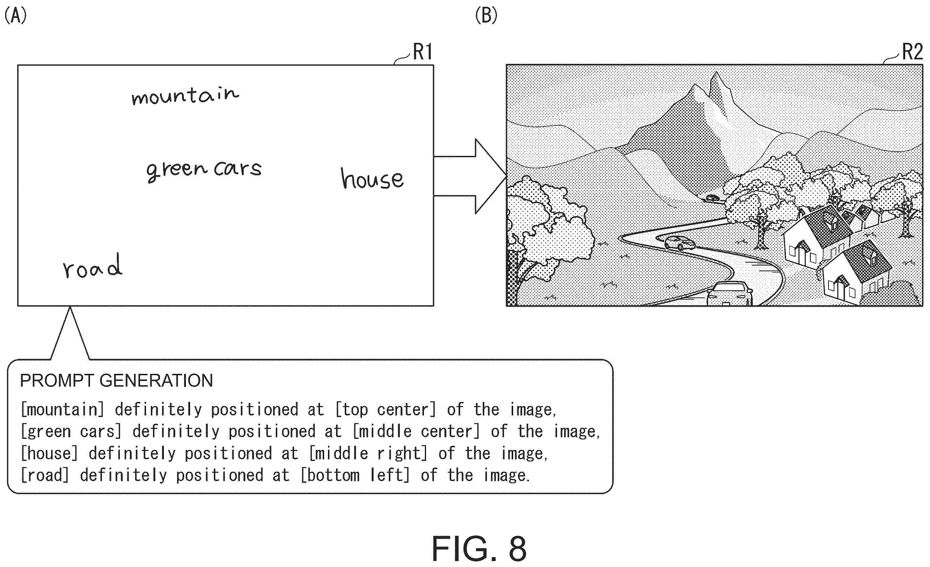

FIG. 8 is a diagram illustrating another example of an input of the input area R1 and an output of the output area R2 according to the present embodiment. (A) of FIG. 8 illustrates an input example of the input area R1, and (B) of FIG. 8 illustrates an output example of the output area R2.

In the input example illustrated in (A) of FIG. 8, there is no input of a sketch, and the letters "mountain", "green cars", "house", and "road" are input by hand. In this case, the prompt to be generated is, for example, "[mountain] definitely positioned at [top center] of the image, [green cars] definitely positioned at [middle center] of the image, [house] definitely positioned at [middle right] of the image, [road] definitely positioned at [bottom left] of the image."

In the example of the generated image illustrated in (B) of FIG. 8, an image in which a house is present on the right of a road on which a plurality of cars (green cars) is running and a mountain rises in the distance is generated according to the input example of the letters illustrated in (A) of FIG. 8. The generated image illustrated in this drawing is an image diagram drawn by imitating the generated image generated by the image generation model 31.

### [Input Example of Letters]

In addition, in a case of inputting the letters, there is also a case where it is desired to put the letters themselves into the image in addition to generating the image corresponding to the letters (word cluster). In a case where the word cluster includes a specific symbol, the image generation processing unit 110 (prompt generation unit 114) generates a prompt indicating an instruction to position the word cluster as letters at a position corresponding to the position information. The specific symbol can be freely set, but in the present embodiment, the specific symbol is set to ().

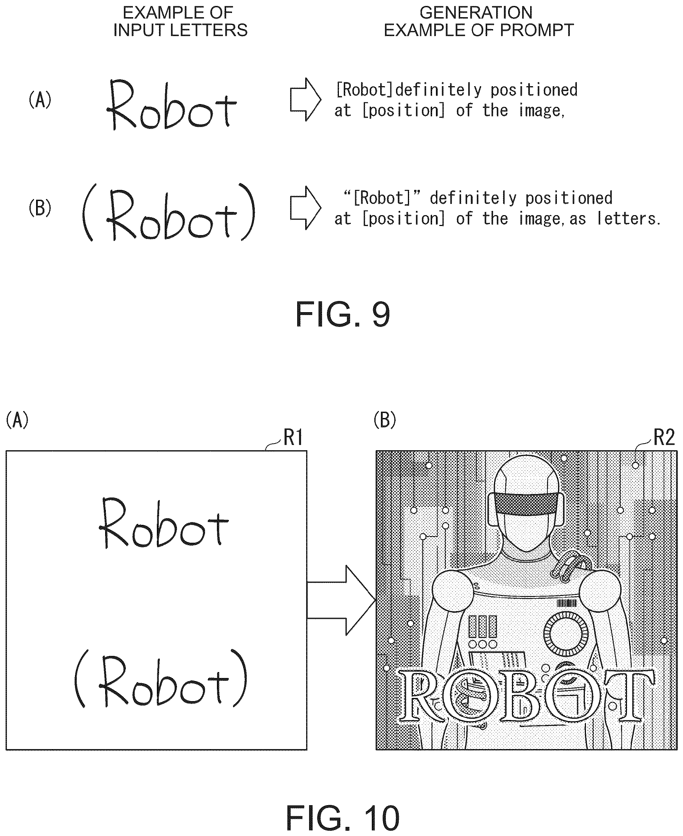

FIG. 9 is a diagram illustrating examples of a prompt in a case where a specific symbol is present and a case where the specific symbol is not present. (A) of FIG. 9 is an example in a case where there is no specific symbol, the letters input by hand are "Robot", and the prompt to be generated is, for example, "[Robot] definitely positioned at [position] of the image." [position] is a part in which position information is applied.

(B) of FIG. 9 is an example in a case where there is a specific symbol, and the letters input by hand are "(Robot)". Since the word cluster "(Robot)" includes the specific symbol (), the prompt to be generated is, for example, "'[Robot]' definitely positioned at [position] of the image, as letters." That is, in a case where the specific symbol () is included, generating the word cluster as letters is described in the prompt.

FIG. 10 is a diagram illustrating an example of an image generated by handwritten input of the letters illustrated in FIG. 9. (A) of FIG. 10 illustrates an input example of the input area R1, and (B) of FIG. 10 illustrates an output example of the output area R2.

In the input example illustrated in (A) of FIG. 10, there is no input of a sketch, and the letters [Robot] are input on the top and the letters "(Robot)" are input on the bottom in letters by hand. The prompt to be generated from the letters (word cluster) input by hand is as illustrated in FIG. 9, and generating the word cluster as letters because the specific symbol () is included in the "(Robot)".

In the example of the generated image illustrated in (B) of FIG. 10, an image including the image of the robot and "ROBOT" as letters is generated according to the input example of the letters illustrated in (A) of FIG. 10. The generated image illustrated in this drawing is an image diagram drawn by imitating the generated image generated by the image generation model 31.

As described above, the information processing apparatus 10 according to the present embodiment detects the letters in the image and determines the letter group including one or a plurality of words among the detected letters as the word cluster. In addition, the information processing apparatus 10 acquires position information indicating a position of the word cluster in the image, and generates a prompt as an input sentence for the image generation model 31 based on the word cluster and the position information.

As a result, the information processing apparatus 10 automatically generates a prompt corresponding to the position of the letter group (word cluster) by detecting the letters from the image. Therefore, in a case of a person who is not good at drawing, or in a case where it is difficult or it takes time and effort to express the objects with a drawing, the information processing apparatus 10 can cause the image generation model 31 to generate an image by inputting letters on an image such as a sketch, without drawing. Therefore, the information processing apparatus 10 can improve convenience in a case of using the image generation AI.

If the image including the letters is input to the image generation model 31 as it is (the letters are also input as an image), in the related art, a case where the letter part is generated as an image and a case where the letter part is generated as the letters themselves are randomly generated. On the other hand, in the present embodiment, the information processing apparatus 10 separates the letters from the image and generates a prompt so that the intended image is generated. In addition, since the information processing apparatus 10 generates a prompt based on the word cluster and the position information thereof, it is not necessary for the user to create a prompt describing the position in the image where the objects are to be positioned in a sentence, and the convenience is excellent.

For example, the information processing apparatus 10 generates a prompt including a word cluster and position information in a sentence.

As a result, the information processing apparatus 10 can generate a prompt including the word cluster and the position information thereof without the user creating a prompt describing the position in the image where the objects are to be positioned in a sentence, and therefore the convenience is excellent.

More specifically, the information processing apparatus 10 generates a prompt indicating an instruction to generate an image so that an image corresponding to the word cluster is positioned at a position corresponding to the position information.

As a result, the information processing apparatus 10 can generate a prompt indicating an instruction so that the image intended by the user is positioned at an appropriate position in the generated image generated by the image generation model 31 based on the letters input by the user.

In addition, when a specific symbol is included in the word cluster, the information processing apparatus 10 generates a prompt indicating an instruction to position the word cluster as letters at a position corresponding to the position information.

As a result, the user only needs to input the letters with the specific symbol even when the user wants to put the letters themselves in the generated image generated by the image generation model 31, and therefore the information processing apparatus 10 has excellent convenience.

For example, the information processing apparatus 10 detects letters by analyzing handwritten strokes included in the image.

As a result, the information processing apparatus 10 can appropriately generate the prompt only by the user inputting letters by hand.

In addition, the information processing apparatus 10 generates an image in which the detected letters are removed from the image as an input image for the image generation model 31.

As a result, the information processing apparatus 10 can appropriately input an image to the image generation model 31 by removing the letters from the image even in a case where the image includes a sketch and letters. Therefore, the information processing apparatus 10 can prevent the occurrence of random generation of the letters as an image or the letters themselves.

In addition, the information processing apparatus 10 acquires the generated image output from the image generation model 31 by inputting the input image in which the letters are removed from the image and the generated prompt to the image generation model 31.

As a result, the information processing apparatus 10 automatically generates a prompt corresponding to a position of a letter group (word cluster) by detecting letters from the image, and inputs the generated prompt and the image in which the letters are removed to the image generation model 31. Therefore, when a person who is not good at drawing or when it is difficult or it takes time and effort to express the objects with a drawing, the information processing apparatus 10 can cause the image generation model 31 to generate an image by inputting letters on an image such as a sketch, without drawing. Therefore, the information processing apparatus 10 can improve convenience in a case of using the image generation AI.

In addition, the prompt generation method in the information processing apparatus 10 according to the present embodiment includes a step of detecting letters in an image, a step of determining, as a word cluster, a letter group including one or a plurality of words among the detected letters, a step of acquiring position information indicating a position of the determined word cluster in the image, and a step of generating a prompt as an input sentence for an image generation model 31 based on the word cluster and the position information by a control unit 18 (image generation processing unit 110).

As a result, in the prompt generation method in the information processing apparatus 10, the prompt corresponding to the position of the letter group (word cluster) is automatically generated by detecting the letters from the image. Therefore, in a case where a person who is not good at drawing or in a case where it is difficult or it takes time and effort to express the objects with a drawing, the information processing apparatus 10 can cause the image generation model 31 to generate an image by inputting letters on an image such as a sketch, without drawing. Therefore, the prompt generation method in the information processing apparatus 10 can improve convenience in a case of using the image generation AI.

In addition, according to the prompt generation method in the information processing apparatus 10, since the letters are separated from the image to generate a prompt, when the image including the letters is input to the image generation model 31 as it is (the letters are also input as an image), both a case where the letter part is generated as an image and a case where the letter part is generated as the letters themselves are not randomly generated, and thus the intended image is generated. In addition, according to the prompt generation method in the information processing apparatus 10, since a prompt based on the word cluster and the position information thereof is generated, it is not necessary for the user to create a prompt describing the position in the image where the objects are to be positioned in a sentence, and the convenience is excellent.

In addition, the image generation method in the information processing apparatus 10 according to the present embodiment includes a step of detecting letters in an image, a step of determining, as a word cluster, a letter group including one or a plurality of words among the detected letters, a step of acquiring position information indicating a position of the determined word cluster in the image, a step of generating a prompt as an input sentence for an image generation model 31 based on the word cluster and the position information, a step of generating an image in which the detected letters are removed from the image as an input image for the image generation model 31, and a step of acquiring a generated image output from the image generation model 31 by inputting the generated input image and the generated prompt to the image generation model 31, via a control unit 18 (image generation processing unit 110).

As a result, in the image generation method in the information processing apparatus 10, a prompt corresponding to a position of a letter group (word cluster) is automatically generated by detecting letters from the image, and the generated prompt and the image in which the letters are removed are input to the image generation model 31. Therefore, in a case where a person who is not good at drawing or in a case where it is difficult or it takes time and effort to express the objects with a drawing, the information processing apparatus 10 can cause the image generation model 31 to generate an image by inputting letters on an image such as a sketch, without drawing. Therefore, the image generation method in the information processing apparatus 10 can improve convenience in a case of using the image generation AI.

Although the embodiment of the present invention has been described in detail with reference to the drawings, the specific configuration is not limited to the above-described embodiment, and designs and the like within a range not departing from the scope of the present invention are also included. For example, each configuration described in the above-described embodiment can be freely combined with each other.

In addition, in the above-described embodiment, the example in which the letters are input on the sketch by hand has been described, but the input of the letters is not limited to handwriting, and a keyboard or the like can also be used.

In addition, in the above-described embodiment, the example in which the display 150 is one display provided over the first chassis 10A and the second chassis 10B has been described, but the present invention is not limited to this. For example, the information processing apparatus 10 may be provided with two displays, one for each of the first chassis 10A and the second chassis 10B. In addition, the information processing apparatus 10 may be provided with a display only in one of the first chassis 10A and the second chassis 10B (for example, only the first chassis 10A).

In addition, the information processing apparatus 10 is not limited to a clamshell type (laptop) PC, and may be, for example, a tablet type PC or a desktop type PC.

In addition, in the above-described embodiment, an example of a touch panel type display in which the input unit (touch sensor) and the display unit (display) are integrated has been described, but a non-touch panel type display that does not have the input unit (touch sensor) may be used. In that case, for example, a touch pad, a mouse, or the like may be used as the input device that receives the operation instead of the input unit (touch sensor).

The information processing apparatus 10 described above has a computer system inside. A program for realizing the functions of each configuration included in the information processing apparatus 10 described above may be recorded on a computer-readable recording medium, and the program recorded on the recording medium may be loaded into the computer system and executed to perform the processing in each configuration included in the information processing apparatus 10 described above. Here, "loading the program recorded on the recording medium into the computer system and executing" includes installing the program in the computer system. The "computer system" referred to here includes hardware such as an OS and peripheral devices. In addition, the "computer system" may include a plurality of computer devices connected via a network including a communication line such as the Internet, a WAN, a LAN, or a dedicated line. In addition, the "computer-readable recording medium" refers to a storage device such as a portable medium such as a flexible disk, a magneto-optical disk, a ROM, or a CD-ROM, or a hard disk built in a computer system. As described above, the recording medium in which the program is stored may be a non-transitory recording medium such as a CD-ROM.

In addition, the recording medium also includes a recording medium which is provided internally or externally and accessible from a distribution server to distribute the program. It should be noted that a configuration in which after the program is divided into a plurality of parts and each of the parts is downloaded at different timings, the program is combined into each configuration included in the information processing apparatus 10, or a distribution server that distributes each of the divided programs may be different. Further, the "computer-readable recording medium" includes a recording medium that holds a program for a certain period of time, such as a volatile memory (RAM) inside a computer system serving as a server or a client when a program is transmitted via a network. In addition, the program may be a program for realizing a part of the above-described functions. Furthermore, the above-described functions may be realized in combination with a program already recorded in the computer system, which is a so-called difference file (difference program).

In addition, a part or all of the functions provided in the information processing apparatus 10 in the above-described embodiment may be realized as an integrated circuit such as a large scale integration (LSI). Each function may be individually processed, or a part or all of the functions may be integrated and processed. In addition, the method of integrating the circuits is not limited to LSI, and may be realized by a dedicated circuit or a general-purpose processor. In addition, in a case where a technique of integrating a circuit has appeared as a substitute for LSI due to the advancement of semiconductor technology, an integrated circuit using the technique may be used.

### Description of Symbols

- 10: information processing apparatus
- 10A: first chassis
- 10B: second chassis
- 30: image generation server
- 31: image generation model
- 11: communication unit
- 12: RAM
- 13: storage unit
- 14: speaker
- 15: display unit
- 16: camera
- 150: display
- 150A: first screen region
- 150B: second screen region
- 155: touch sensor
- 18: control unit
- 110: image generation processing unit
- 111: letter detection unit
- 112: word cluster determination unit
- 113: position information acquisition unit
- 114: prompt generation unit
- 115: letter removal unit
- 116: generated image acquisition unit
- SYS: information processing system

## Claims

1. An information processing apparatus comprising:
a letter detection unit configured to detect letters in an image;
a word cluster determination unit configured to determine, as a word cluster, a letter group including one or a plurality of words among the letters detected by the letter detection unit;
a position information acquisition unit configured to acquire position information indicating a position of the word cluster in the image, the word cluster being determined by the word cluster determination unit; and
a prompt generation unit configured to generate a prompt as an input sentence for an image generation model based on the word cluster and the position information.

2. The information processing apparatus according to claim 1,
wherein the prompt generation unit generates a prompt including the word cluster and the position information in a sentence.

3. The information processing apparatus according to claim 2,
wherein the prompt generation unit generates the prompt indicating an instruction to generate an image so that an image corresponding to the word cluster is positioned at a position corresponding to the position information.

4. The information processing apparatus according to claim 2,
wherein the prompt generation unit generates the prompt indicating an instruction to position the word cluster as letters at a position corresponding to the position information in a case where a specific symbol is included in the word cluster.

5. The information processing apparatus according to any one of claims 1 to 4,
wherein the letter detection unit detects letters by analyzing handwritten strokes included in the image.

6. The information processing apparatus according to any preceding claim, further comprising:
a letter removal unit configured to generate an image in which the letters detected by the letter detection unit are removed from the image as an input image for the image generation model.

7. The information processing apparatus according to claim 6, further comprising:
a generated image acquisition unit configured to acquire a generated image output from the image generation model by inputting the input image generated by the letter removal unit and the prompt generated by the prompt generation unit to the image generation model.

8. A prompt generation method in an information processing apparatus, the method comprising:
a step of detecting letters in an image via a letter detection unit;
a step of determining, as a word cluster, a letter group including one or a plurality of words among the letters detected by the letter detection unit, via a word cluster determination unit;
a step of acquiring position information indicating a position of the word cluster in the image via a position information acquisition unit, the word cluster being determined by the word cluster determination unit; and
a step of generating a prompt as an input sentence for an image generation model based on the word cluster and the position information via a prompt generation unit.

9. An image generation method in an information processing apparatus, the method comprising:
a step of detecting letters in an image via a letter detection unit;
a step of determining, as a word cluster, a letter group including one or a plurality of words among the letters detected by the letter detection unit, via a word cluster determination unit;
a step of acquiring position information indicating a position of the word cluster in the image via a position information acquisition unit, the word cluster being determined by the word cluster determination unit;
a step of generating a prompt as an input sentence for an image generation model based on the word cluster and the position information via a prompt generation unit;
a step of generating an image in which the letters detected by the letter detection unit are removed from the image via a letter removal unit as an input image for the image generation model; and
a step of acquiring a generated image output from the image generation model by inputting the input image generated by the letter removal unit and the prompt generated by the prompt generation unit to the image generation model, via a generated image acquisition unit.

10. The information processing apparatus according to claim 9,
wherein the step of generating a prompt comprises generating a prompt including the word cluster and the position information in a sentence.

11. The image generation method according to claim 10,
wherein the step of generating a prompt comprises generating the prompt indicating an instruction to generate an image so that an image corresponding to the word cluster is positioned at a position corresponding to the position information.

12. The image generation method according to claim 10,
wherein the step of generating a prompt comprises generating the prompt indicating an instruction to position the word cluster as letters at a position corresponding to the position information in a case where a specific symbol is included in the word cluster.

13. The image generation method according to any one of claims 9 to 12,
wherein the step of detecting letters comprises detecting letters by analyzing handwritten strokes included in the image.

14. The image generation method according to any one of claims 9 to 13, further comprising:
a letter removal step comprising generating an image in which the letters detected by the step of detecting letters letter detection unit are removed from the image as an input image for the image generation model.

15. The image generation method according to claim 14, further comprising:
a generated image acquisition step comprising acquiring a generated image output from the image generation model by inputting the input image generated by the letter removal step and the prompt generated by the prompt generation step to the image generation model.
